# EUROPEAN PATENT APPLICATION

(11) **EP 1 616 819 A1**
(43) Date of publication of application: **18.01.2006**
(21) Application number: 04724389.4
(22) Date of filing: 30.03.2004
(51) Int. Cl.: B65G 23/14, B65G 15/08, B65G 15/60

(54) **BOOSTER DEVICE FOR PIPE CONVEYOR AND PIPE CONVEOR DEVICE USING THE SAME**

(30) Priority: 01.04.2003 JP 2003097970
(71) Applicant: Bridgestone Corporation, Tokyo 104-0031 (JP)
(72) Inventor: SAKAGUCHI, Toshiki, c/o Bridgestone Corporation, Yokohama-shi, Kanagawa 224-0812 (JP); IMAI, Atsushi, c/o Bridgestone Corporation, Yokohama-shi, Kanagawa 224-0812 (JP); OYAMA, Toshikazu, c/o Bridgestone Corporation, Yokohama-shi, Kanagawa 224-0812 (JP)
(74) Representative: Jaeschke, Rainer
(86) International application number: PCT/JP2004/004541
(87) International publication number: WO 2004/089789

(57) **Abstract**

A booster device (2) is provided in the vicinity of the intermediate portion of an outward-going path (1a) of a conveyor belt (1) that is rolled up into a hollow-cylindrical shape. The booster device (2) has a pair of auxiliary pulleys (3, 3) spaced apart from each other, drive means (4) for rotating at least either of the pulleys (3, 3), and a booster belt (5) wound on the pulleys (3, 3) and set so as to endlessly run. The intermediate portion of an outward-going path (5a) of the booster belt (5) on the pulleys (3, 3) is made to be in contact with the outer periphery of the hollow-cylindrically rolled up portion of the conveyor belt (1) so that the booster belt (5) runs in the same direction as the conveyor belt (1). The booster device (2) reliably transmits intermediate drive force to a pipe conveyor belt.

## Description

### TECHNICAL FIELD

The present invention relates to a booster for a tubular belt conveyor and a tubular belt conveyor having the same.

### BACKGROUND ART

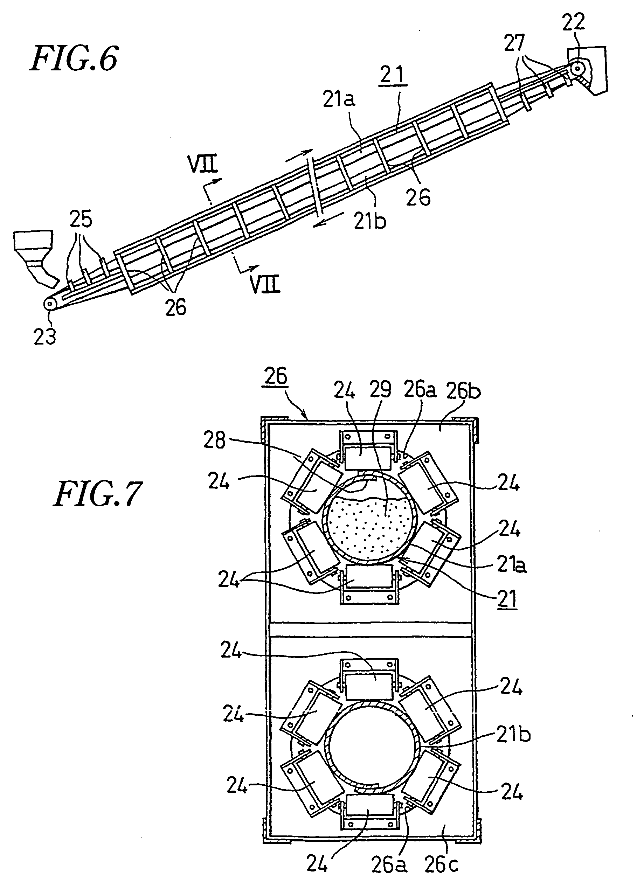

Figs. 6 and 7 show one embodiment of a conventional tubular belt conveyor.

In the tubular belt conveyor, an endless conveyor belt 21 is flattened out and wound around a front pulley 22 and a rear pulley 23 to circulate. The belt 21 is rolled up between the pulleys 22 and 23 through a plurality of guide frames 25,26,27 in which a plurality of guide rollers 24 are arranged annularly or in a semi-circle to form a tube having an overlapped portion 28 in which the side edges of the belt 21 are overlapped to allow conveyed material 29 to be enclosed and carried.

As shown in Fig. 7, the intermediate guide frame 26 has an upper chamber 26b and a lower chamber 26c each having an opening 26a through which the belt 21 passes. In each of the chambers 26b,26c, the rollers 24 are annularly arranged to surround the opening 26a.

A going belt 21a and a returning belt 21b of the belt 21 are allowed to pass through the openings 26a and 26a of the upper chamber 26b and the lower chamber 26c respectively, so that the belts 21a and 21b are supported cylindrically.

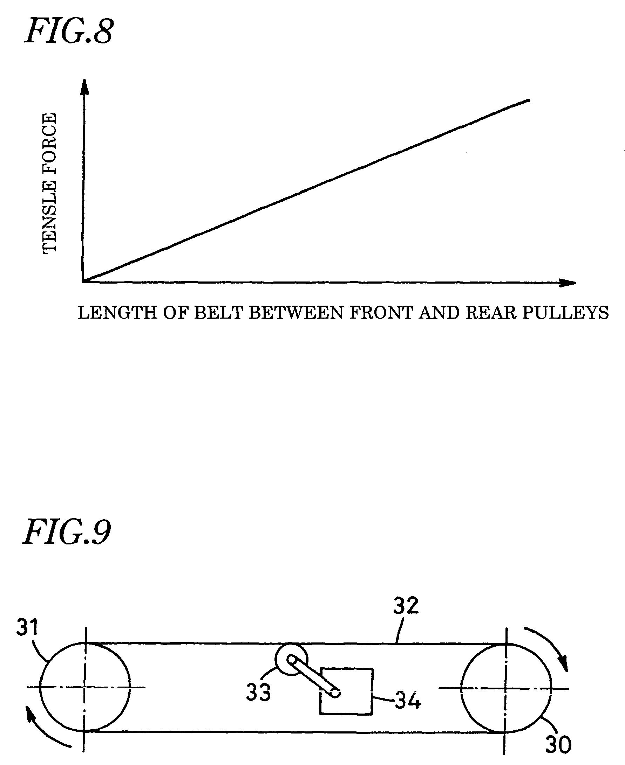

Fig. 8 shows how tensile force that occurs when the belt 21 is driven varies with the length of the belt 21 between the front pulley 22 and the rear pulley 23.

As shown in Fig. 8, to transmit driving force to the belt from the front pulley 22, pressure of the front pulley 22 and the belt 21 is required to rise in proportion to the length of the belt 21.

The longer the belt 21 is, the heavier the belt 21 and the conveyed material are. Thus it is necessary to increase driving force.

In a long-distance tubular belt conveyor, it is necessary to use a high tensile force conveyor belt that can bear high tensile stress. However, it is disadvantageous to increase manufacturing cost, so that it is limited to realize a long-distance tubular conveyor belt.

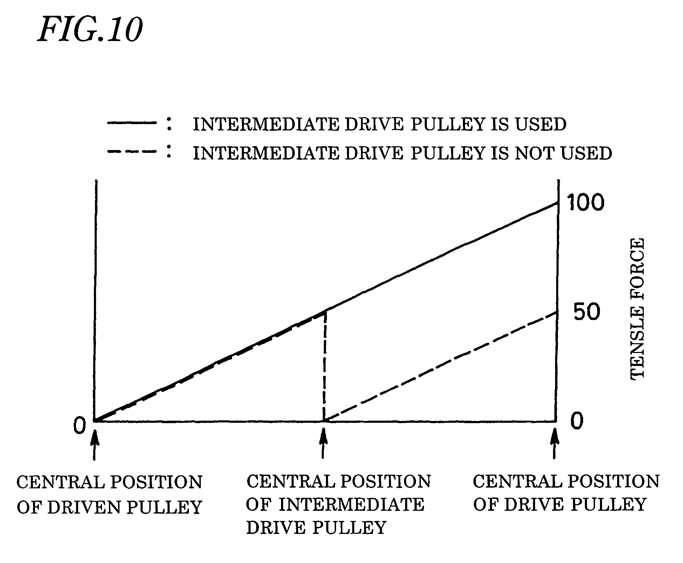

Fig. 9 is a schematic view of a conventional booster used in a flat conveyor belt 32, and Fig. 10 shows how tensile force that occurs when the belt is driven varies with the length of the flat conveyor belt 32 between a drive pulley 30 and a driven pulley 31.

A solid line in Fig. 10 shows tensile force occurring in the belt when an intermediate drive pulley 33 is not used, and a broken line shows tensile force in the belt when the intermediate drive pulley 33 is used.

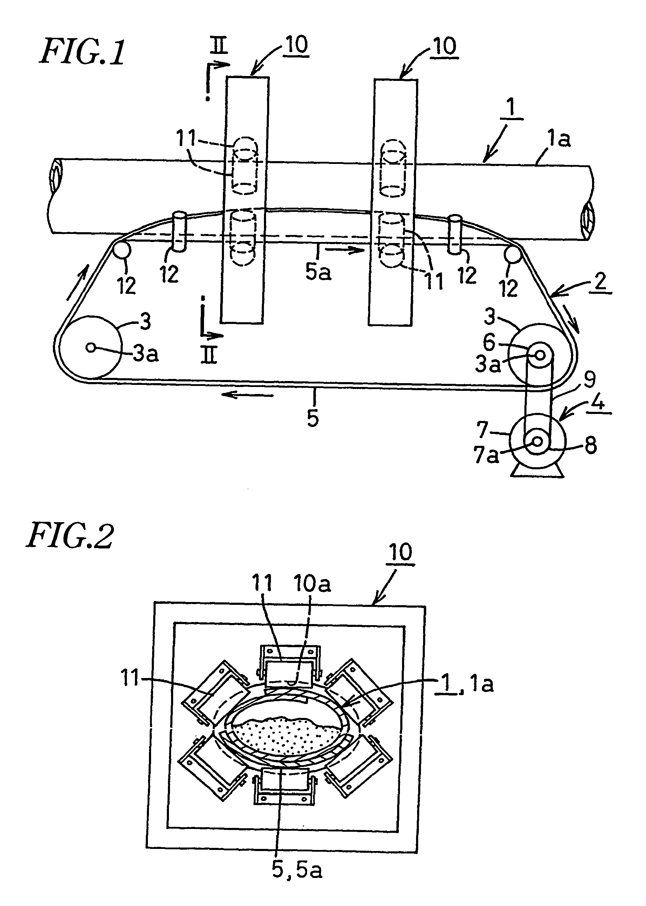

Japanese Patent Pub. No. 10-316215 discloses in Figs. 1 and 2 a booster in which an intermediate drive pulley 33 is allowed to press onto the underside of the flat conveyor belt 32 at the intermediate position of the length of the flat conveyor belt 32 to enable moving speed of the flat conveyor belt 32 to coincide with circumferential speed of the intermediate drive pulley 33 to transmit driving force of the intermediate drive pulley 33 to the flat conveyor belt 32.

Drive force is applied by the intermediate drive pulley 33 to the flat conveyor belt 32 in the middle of the flat conveyor belt 32 to reduce tensile force applied to the flat conveyor belt 32 by half to carry out reduction in the manufacturing cost to realize a long-distance flat conveyor belt.

However, in a tubular conveyor belt, to prevent conveyed material from falling down during transportation, a belt is rolled up to a tubular form. It can not assure pressing area enough to apply to the belt thereby failing sufficient drive force by the intermediate drive pulley in such a booster for a flat conveyor belt above.

To increase pressing area, the intermediate drive pulley is formed to have larger diameter and smaller central diameter. Owing to difference in speed, abnormal wear occurs in the belt, and owing to slight variation in external diameter of the tubular belt, pressing area is reduced, so that enough driving force is not able to be transmitted.

In view of the foregoing disadvantages in the prior art, an object of the present invention is to provide a booster for a tubular belt conveyor, enabling intermediate drive force to transmit a tubular belt surely and to provide a tubular belt conveyor having the same.

### BRIEF DESCRIPTION OF THE DRAWINGS

The features and advantages of the present invention will become more apparent from the following description with respect to embodiments as shown in the appended drawings as below:
Fig. 1 is a partial schematic side view of the first embodiment of a tubular belt conveyor having a booster according to the present invention;
Fig. 2 is a vertical sectional view taken along the line II-II in Fig. 1;
Fig. 3 is a vertical sectional view similar to Fig. 2 in the second embodiment of a tubular belt conveyor according to the present invention;
Fig. 4 is a schematic side view of the third embodiment of a tubular belt conveyor according to the present invention;
Fig. 5 is a schematic side view of the fourth embodiment of a tubular belt conveyor according to the present invention;
Fig. 6 is a schematic side view of a known tubular belt conveyor;
Fig. 7 is an enlarged vertical sectional view taken along the line VII-VII in Fig. 6;
Fig. 8 is a view showing how tensile force that occurs when the belt is driven varies with the length of a known belt;
Fig. 9 is a schematic side view of a flat belt conveyor in which a know booster is provided; and
Fig. 10 is a view showing how tensile force that occurs when the belt is driven varies with the length of a known flat conveyor belt.

### DETAILED DESCRIPTION OF PREFERRED EMBODIMENTS

Figs. 1 and 2 show one embodiment of a tubular belt conveyor and the first embodiment of a tubular belt conveyor having the same. The basic structure of the tubular belt conveyor is the same as that as shown in Figs. 6 and 7 and their descriptions are omitted.

In the embodiment, there is provided a booster 2 for a tubular belt conveyor close to a tubular portion of a going belt 1a of an endless conveyor belt 1. The booster 2 comprises a pair of auxiliary pulleys 3,3 spaced apart from each other in a going direction of the going belt 1a; drive means 4 for turning one of the pulleys 3,3; and a booster belt 5 wound around both the pulleys 3,3 and pressingly contacted on the underside of the tubular booster belt 5.

The drive means 4 comprises a pulley 6 or a sprocket fixed to a shaft 3a of one of the auxiliary pulleys 3,3; a pulley 8 or a sprocket fixed to an output shaft 7a of a motor 7 on a stationary member (not shown); and a belt 9 or a chain wound around the pulleys 6,8 to allow a going path 5a of the booster belt 5 via the belt 9 to go in the same direction as the going direction of the going belt 1a thereby applying auxiliary drive force to the going belt 1a by frictional force between the booster belt 5 and the going belt 1 a.

A support frame 10, similar to the guide frame 26 in Fig. 7, has an elliptical opening 10a around which six support rollers 11 are provided in an ellipse.

The going path 5a of the booster belt 5 contacts the underside of the tubular going belt 1a and goes with the going belt 1a through the openings 10a of the two support frames 10,10 surrounded by the support rollers 11. The booster belt 5 is deformed to conform to the shape of the underside of the elliptical going belt 1a and pressingly contacts the underside of the going belt 1 a.

Thus, adherence between the booster belt 5 and the going belt 1a is increased, so that auxiliary drive force of the booster 2 is transmitted to the belt 1 surely without sliding therebetween.

As shown in Fig. 2, the upper support rollers 11,11 is pivotally mounted to the support frame 10 close to the side edges of the booster belt 5 and preferably at about right angles with respect to the side edges. When the booster belt 5 deviates sideward, the side edge of the booster belt 5 engages with the support rollers 11,11 to prevent sideward deflection of the booster belt 5.

The numeral 12 denotes a guide roller for guiding the going path 5a of the booster belt 5 into the support frame 10 and returning it from the support frame 10.

The support rollers 11 may preferably be arranged in an ellipse, but may be arranged in a circle similar to the arrangement of the guide rollers 24 in Fig. 7.

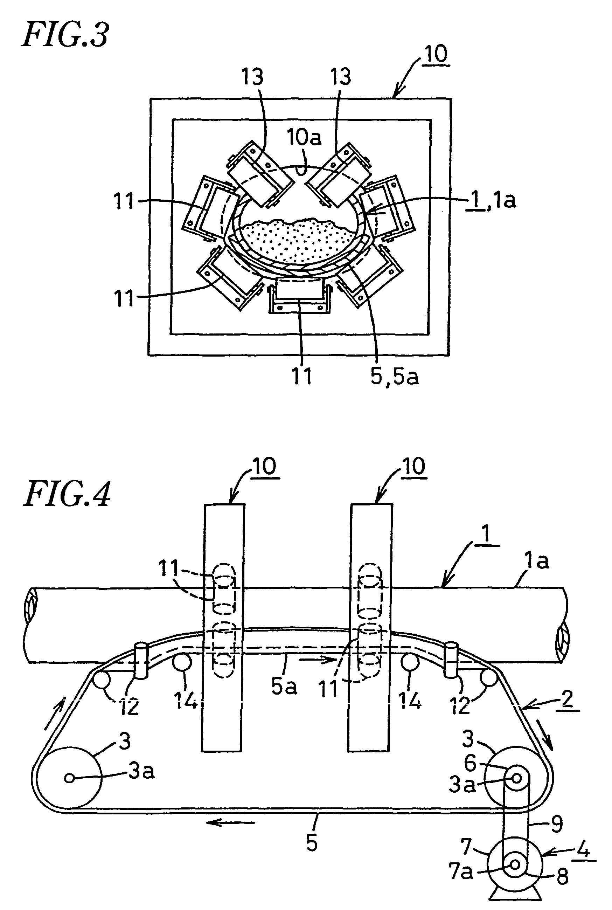

Fig. 3 shows the second embodiment of a tubular belt conveyor according to the present invention.

In this embodiment, there is provided a pair of opening rollers 13,13 in V shape as opening means for partially opening the intermediate portion of a tubular going belt 1a, and below them, five support rollers 11 are arranged around the elliptical opening 10a. The side edges of the going belt 1 a contact the outer surfaces of the opening rollers 13,13, and the going belt 1a adheres to the going path 5a of the booster belt 5. The going belt 1a is allowed to go through the opening 10a with the booster belt 5 which conforms to the shape of the underside of the going belt 1a to increase adherence.

The side edges of the going belt 1a is limited by the opening rollers 13,13 and prevented from meandering or twisting. The underside of the going belt 1a can be strongly pressed onto the booster belt 5.

Fig. 4 shows the third embodiment of a tubular belt conveyor according to the present invention. In this embodiment, there is provided a pair of pressing-up rollers 14,14 before and behind a pair of support frames 10,10 in a going direction of a going path 1a as pressing-up means for pressing portion of a tubular going belt 1a with the booster belt 5 upper than the other portions of the going belt 1 a, thereby improving adherence of the booster belt 5 onto the outer circumferential surface of the going belt 1 a.

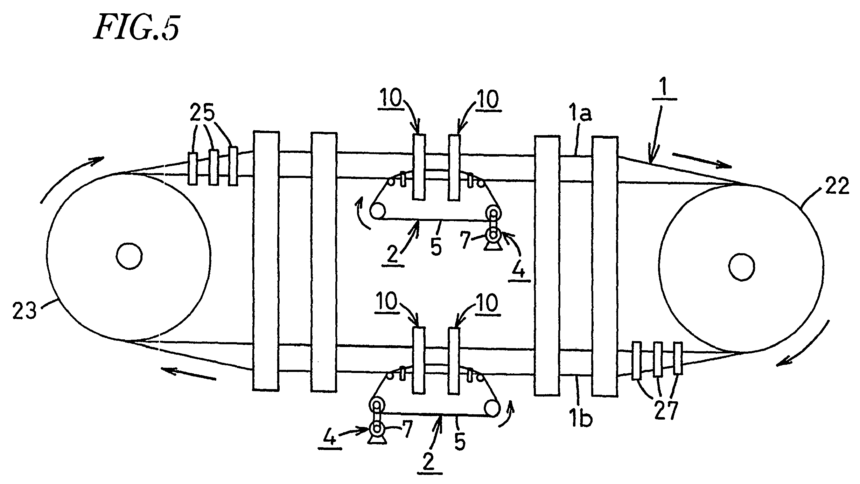

Fig. 5 shows the fourth embodiment of a tubular belt conveyor according to the present invention. The same numerals are allotted to the same members in the foregoing embodiments and the known example and their descriptions are omitted.

In the embodiment, on a tubular going belt 1a and a tubular returning belt 1b, a booster 2 similar to that in Fig. 1 is provided.

The boosters 2 are provided in the middle of the going belt 1a and the returning belt 1b to reduce drive force of drive means for a front roller 22 that drives the belt 1 by half and enabling a long-distance tubular belt conveyor line to be realized.

## Claims

1. A booster for a tubular belt conveyor in which an endless conveyor belt is wound around a pair of pulleys in a flat shape and runs like a tube in an intermediate portion of going and returning paths between the pulleys, said booster pressingly contacting the intermediate portion of the going and/or returning paths to apply auxiliary drive force to said conveyor belt, **characterized in that**:
said booster comprises a pair of auxiliary pulleys spaced apart from each other; drive means for turning at least one of said auxiliary pulleys; and a booster belt wound around said pair of auxiliary pulleys, an intermediate portion of the booster belt between said auxiliary pulleys pressingly contacting the outer circumferential surface of said tubular conveyor belt to run.

2. A tubular belt conveyor in which an endless conveyor belt is wound around a pair of pulley spaced apart from each other in a flat shape and runs like a tube in an intermediate portion of going and returning paths between the pulleys, **characterized in that**:
a booster is provided at an intermediate portion of going and/or returning paths of said tubular conveyor belt, said booster comprising a pair of auxiliary pulleys spaced apart from each other, drive means for turning at least one of said auxiliary pulleys and a booster belt wound around said auxiliary pulleys to run, an intermediate portion of going and/or returning paths of the booster belt between said auxiliary pulleys being allowed to pressingly contact the outer circumferential surface of said tubular conveyor belt to run.

3. A tubular belt conveyor as claimed in claim 2 wherein the booster belt is allowed to pressingly contact the outer circumferential surface of the tubular conveyor belt and to go through a support frame in which a plurality of support rollers are arranged approximately in a circle thereby deforming part of said booster belt to conform to the outer circumferential surface of said tubular conveyor belt.

4. A tubular conveyor belt as claimed in claim 3 wherein said plurality of support rollers are arranged in an ellipse the largest diameter of which is approximately horizontal.

5. A tubular belt conveyor as claimed in claim 4 wherein any one of the support rollers is tilted at a predetermined angle close to the side edge of the booster belt, the side edge of the booster belt contacting said support roller to prevent the booster belt from deviating sideward.

6. A tubular belt conveyor as claimed in claim 2, further comprising opening means for locally opening the tubular conveyor belt, part of the booster belt being allowed to pressingly contact the outer circumferential surface of the conveyor belt and to go through the support frame in which said plurality of support rollers are arranged thereby deforming part of said booster belt to conform to the outer circumferential surface of said conveyor belt.

7. A tubular belt conveyor as claimed in claim 2, further comprising pressing-up means for pressing part of the tubular conveyor belt which the booster belt pressingly contacts, upper than other underside of the tubular conveyor belt.

8. A tubular belt conveyor as claimed in claim 2 wherein the booster is provided at an intermediate position of the going and returning paths.

9. A tubular belt conveyor as claimed in claim 2 wherein the booster is provided at the going and returning paths respectively.
